(19) Europäisches Patentamt European Patent Office Office européen des brevets

(11) **EP 2 062 794 B1**

(12) **EUROPEAN PATENT SPECIFICATION**

(45) Date of publication and mention
of the grant of the patent:
**21.07.2010 Bulletin 2010/29**

(51) Int Cl.:
***B60T 8/172*** *(2006.01)* ***B60W 40/12*** *(2006.01)*

(21) Application number: **07022906.7**

(22) Date of filing: **26.11.2007**

(54) **Method for judging track-keeping capacity of a vehicle**

Verfahren zur Beurteilung der Spurhaltungsfähigkeit eines Fahrzeugs

Procédé d'évaluation de la capacité de suivi de piste d'un véhicule

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**27.05.2009 Bulletin 2009/22**

(73) Proprietor: **GM Global Technology Operations, Inc.**
**Detroit, MI 48265-3000 (US)**

(72) Inventor: **Klomp, Matthijs**
**45932 Ljungskile (SE)**

(74) Representative: **Strauss, Peter**
**Adam Opel GmbH**
**Patentrecht, A0-02**
**65423 Rüsselsheim (DE)**

(56) References cited:
**WO-A-01/70549** **WO-A-2004/074058**
**DE-A1- 10 248 079** **US-A- 5 435 193**

**Description**

The present invention relates to a method for judging the stability and/or controllability of a vehicle in motion, specifically for judging the track-keeping capacity of a motor vehicle when cornering.

It is a commonplace that when a curve is taken too fast, there is a danger that control over the vehicle is lost, and the vehicle is taken out of the intended curve. Therefore, concepts have been discussed for helping a driver to cope with or to avoid such dangerous situations. EP 0 945 320 B1 discloses a process for dynamically controlling the behaviour of a road vehicle, in which a maximum lateral acceleration is estimated, which must not be exceeded. This maximum lateral acceleration is defined as the product of the friction coefficient p and the gravity acceleration g. Using this maximum lateral acceleration, a desired longitudinal deceleration is computed for the braking system of the vehicle.

What EP 0 945 320 B1 fails to take into account is that this maximum lateral acceleration is correct only when deceleration is 0. In other words, the method can not a priori help to avoid a situation in which the computed desired longitudinal deceleration is high enough to cause loss of control over the vehicle, in spite of the estimated maximum lateral acceleration not being exceeded.

There is a need, therefore, for a reliable method for judging the track-keeping capacity of a motor vehicle.

Document US 5435193 describes a complex method for assessing track-keeping capacity.

The object of the present invention is to provide a simplified but still reliable alternative method.

The object is achieved by a method for judging the track-keeping capacity of a motor vehicle having front and rear axles, comprising the steps of

  a) estimating, for at least one of said axles, a first quantity proportional to the weight of the vehicle carried by said axle,
  b) estimating, for said axle, a second quantity proportional to a longitudinal drive force acting on said axle,
  c) calculating a difference of said first and second quantities, and
  d) deriving a measure of the vehicle's track-keeping capacity from said difference.

In fact, these drive forces are practically never zero, since there are resistance forces (such as aerodynamic drag, rolling resistance and road gradient resistance), which must be balanced by the drive forces even to keep a constant speed. By taking account of these longitudinal resistance forces, the present method ensures that the track-keeping capacity is not overestimated, in particular when the vehicle is accelerating or decelerating, so that dangerous situations can be avoided more reliably.

The first quantity is preferably estimated proportional to a friction coefficient between wheels of the vehicle and a ground. Since this friction coefficient varies depending on the type of ground on which the vehicle is moving, it is appropriate to estimate the friction coefficient based on environmental data or data concerning the motion of the vehicle. Schemes for such an estimation will not be treated here, since they are beyond the scope of the present invention.

The difference calculated in step c) preferably is not a scalar difference but a vectorialdifference in which said first and second quantities are treated as mutually perpendicular vectors. Such a difference is conveniently calculated by forming the scalar difference of the squares of said first and second quantities, e.g. of ground friction force and longitudinal drive force or of limit lateral acceleration and longitudinal acceleration, and computing the square root of this difference.

The weight carried by the above-mentioned axle or, equivalently, the ground friction force this axle is capable of withstanding before its wheels will skid, is preferably calculated in real time, considering an instantaneous longitudinal acceleration. Since the centre of gravity of a vehicle is located above the ground plane, the weight on the front axle will decrease, and the weight on the rear axle will decrease in case of acceleration and vice versa in case of deceleration, and the precision of the judgment will be improved by taking account of this effect.

In a simplified embodiment, the effect may be neglected.

If the vehicle is front wheel driven steps a) to d) are preferably carried out for the front axle of the vehicle, since this axle tends to be more susceptible to skidding than the rear axle in a front-wheel drive vehicle.

If the vehicle is rear wheel driven steps a) to d) are preferably carried out for the rear axle of the vehicle, since this axle tends to be more susceptible to skidding than the front axle in a rear-wheel drive vehicle at least when longitudinal drive forces are high relative to the available friction force on the rear axle.

The track-keeping capacity of a front axle in a rear-wheel drive vehicle might in principle be estimated by carrying out above steps a) to d) for this axle. However, since drive forces at the front axle may be neglected while the vehicle is unbraked, calculations may be simplified by cancelling steps b) and c) for the front axle and deriving, in step d), the measure of the vehicle's track-keeping capacity from the difference obtained in step c) for the rear axle and from the first quantity derived for the front axle may be computed by only performing step a) for the front axle, since the drive force on that axle is zero.

Specifically, in step d) the measure of the vehicle's track-keeping capacity may be derived from the smaller one among said difference of step c) and the first quantity derived for the front axle.

The invention further relates to a computer program product comprising program code means for enabling a computer, when carried out on it, to execute the method as described above, and to a data carrier having recorded on it, in computer executable form, the computer program product defined above.

Further features and advantages of the invention will become apparent from the subsequent description of embodiments thereof referring to the appended drawings.

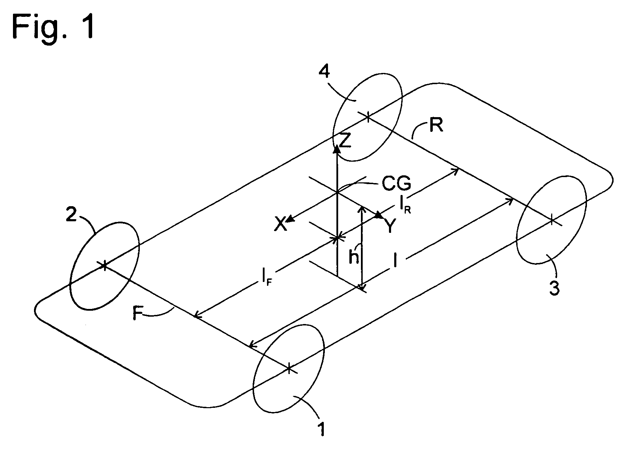

Fig. 1    is a diagram of a vehicle chassis illustrating the definition of various symbols used in the following description.

The diagram of Fig. 1 shows the outline of a vehicle body with four wheels numbered 1 to 4 at front and rear axles F, R. The centre of gravity of the vehicle is referred to in the drawing as CG. It is at the origin of a XYZ coordinate system, wherein the X axis coincides with the longitudinal direction of the vehicle body, the Y axis is horizontal and perpendicular thereto, and the Z axis is vertical.

In Fig. 1, l is the distance between front and rear axles F, R, $l_F$ is the distance, measured along the X axis, between the front axle F and the centre of gravity CG, $l_R$ is the distance between the rear axle R and the centre of gravity CG, and h is the vertical distance between the centre of gravity CG and a horizontal ground plane.

If $F_Z$ is the total weight of the vehicle, the weight carried by front and rear axles F, R is

$$F_{ZF} = F_Z \frac{l_R}{l} \tag{1a}$$

$$F_{ZR} = F_Z \frac{l_F}{l} , \tag{1b}$$

respectively, as long as the speed of the vehicle is constant. If the vehicle is subject to a longitudinal acceleration $a_X$, then

$$F_{ZF} = F_Z \frac{l_R}{l} - \frac{h}{l} ma_X \tag{2a}$$

$$F_{ZR} = F_Z \frac{l_F}{l} + \frac{h}{l} ma_X \tag{2b}$$

holds instead.

Each axle F, R is capable of withstanding a horizontal force $\mu F_{ZF}$, $\mu F_{ZR}$ before its wheels will start to skid. In practice, a non-zero longitudinal drive force $F_{Xi}$ i=F,R may be acting on the wheels of each axle due to the wheels being accelerated or braked. The condition for axle F or R not to skid is therefore that the Euclidean norm of the vector sum of lateral forces $F_{Yi}$ and longitudinal forces $F_{Xi}$ must be less than the friction force $\mu F_{Zi}$, i.e.

$$\left| \vec{F}_{Xi} + \vec{F}_{Yi} \right| < \mu_i F_{Zi} .$$

Accordingly the maximum lateral force which may be applied to axle i, i=F,R may be written as

$$F_{Yi}^{lim} = \sqrt{(\mu_i F_{Zi})^2 - F_{Xi}^2} .\tag{3}$$

Combining eqn. (3) and (2a, 2b), we find

$$F_{YF}^{\text{lim}} = \sqrt{\mu^2 \left( m \frac{l_R}{l} g - m \frac{h}{l} a_X \right)^2 - F_{XF}^2} \qquad (4a)$$

$$F_{YR}^{\text{lim}} = \sqrt{\mu^2 \left( m \frac{l_F}{l} g + m \frac{h}{l} a_X \right)^2 - F_{XR}^2} \qquad (4b)$$

Under the condition that the vehicle is cornering at a constant yaw rate $\dot{\Psi}$ or that the derivative $\ddot{\Psi}$ of the yaw rate is negligible, lateral forces $F_{YF}$, $F_{YR}$ applied at the axles F, R may be replaced by a unique lateral force $F_{CGY}$ applied at the centre of gravity CG, and

$$F_{CGY} = \frac{l}{l_R} F_{YF} = \frac{l}{l_F} F_{YR} \text{ ,}$$

holds. The maximum lateral force which may be applied at CG, $F_{CGY}^{\text{lim}}$ , is then limited by the requirement

$$F_{CGY}^{\text{lim}} = \min \left( \frac{l}{l_R} F_{YF}^{\text{lim}} , \frac{l}{l_F} F_{YR}^{\text{lim}} \right) \qquad (5)$$

For a front wheel drive vehicle, $F_{XR} = 0$, and eqn. (4b) simplifies to

$$F_{YR}^{\text{lim}} = \mu m \left( g \frac{l_F}{l} + \frac{h}{l} a_X \right) \qquad (6)$$

and eqns. (4a, 5, 6) yield

$$F_{CGY}^{\text{lim}} = \min \left( \frac{l}{l_R} \sqrt{\mu^2 \left( m \frac{l_R}{l} g - m \frac{h}{l} a_X \right)^2 - F_{XF}^2} , \frac{l}{l_F} \mu m \left( \frac{l_F}{l} g + \frac{h}{l} a_X \right) \right)$$

$$= \min \left( \sqrt{\mu^2 \left( mg - m \frac{h}{l_R} a_X \right)^2 - \left( \frac{l}{l_R} F_{XF} \right)^2} , \mu m \left( g + \frac{h}{l_F} a_X \right) \right) \qquad (7)$$

In this expression, the term $\left( m \frac{l_R}{l} g - m \frac{h}{l} a_X \right)$ is proportional to the weight of the vehicle carried by the front axle, i.e. of a vertical force, whereas $F_{XF}$ is a horizontal force. The square root therefore corresponds to a vector difference of a vertical and a horizontal force. It can be shown that the first term in (7) is always the smaller one, i.e.

$$F_{CGY}^{\text{lim}} = \sqrt{\mu^2 \left( mg - m\frac{h}{l_R} a_X \right)^2 - \left( \frac{l}{l_R} F_{XF} \right)^2} \quad .$$

$$(8).$$

Accordingly, the lateral acceleration of the vehicle when cornering must not exceed

$$a_{CGY}^{\text{lim}} = \sqrt{\mu^2 \left( g - \frac{h}{l_R} a_X \right)^2 - \left( \frac{l}{l_R} a_X \right)^2} \quad . \tag{9}$$

For a rear wheel drive vehicle, $F_{XF} = 0$, and eqn. (4a) simplifies to

$$F_{YF}^{\text{lim}} = \mu m \left( \frac{l_R}{l} g - \frac{h}{l} a_X \right) \tag{10}$$

Eqns. (4b, 5, 10) yield

$$F_{CGY}^{\text{lim}} = \min \left( \mu m \left( g - \frac{h}{l_R} a_X \right), \sqrt{\mu^2 m^2 \left( g + \frac{h}{l_F} a_X \right)^2 - \left( \frac{l}{l_F} F_{XR} \right)^2} \right) \tag{11}$$

and

$$a_{CGY}^{\text{lim}} = \min \left( \mu \left( g - \frac{h}{l_R} a_X \right), \sqrt{\mu^2 \left( g + \frac{h}{l_F} a_X \right)^2 - \left( \frac{l}{l_F} a_X \right)^2} \right) \tag{12}$$

Here, as in eqn. (9), the square root corresponds to a vector difference between the friction force, taken to be vertical, and the horizontal drive force.

For a rigid all wheel drive vehicle (locked center differential) with open front and rear differentials, the following assumption can be made:

$$F_{XF} / F_{ZF} = F_{XR} / F_{ZR}$$

yielding

$$a_{CGY}^{\text{lim}} = \frac{l_R g - h a_X}{l_R g} \sqrt{\mu^2 g^2 - a_X^2} \tag{13}$$

For an all-wheel drive in which the front/rear drive force distribution is actively controlled and is optimized to maximize the lateral grip, and where both front and rear drive forces $F_{XF}, F_{XR}$ are positive, we find

$$a_{CGY}^{\text{lim}} = \min\left( \mu\left( g - \frac{1}{l_R} h a_x \right), \sqrt{\mu^2 g^2 - a_X^2} \right) \qquad (14)$$

In all cases considered above, i.e. eqns. (9, 12, 13, 14), a dimensionless quantity indicative of the track stability of the vehicle can be defined as

$$\Lambda = 1 - \sqrt{\frac{F_{CGY}}{F_{CGY}^{\text{lim}}}} \, . \qquad (15)$$

 The quantity A can take any value from 0 to 1, 1 corresponding to zero lateral forces and 0 corresponding to the skidding threshold.

The vehicle is equipped with a microcontroller having stored in it a program for carrying out the track-keeping capacity judging method of the invention. At regular intervals, the microcontroller determines the longitudinal and lateral acceleration $a_x$, $a_y$ of the vehicle, e.g. by direct measurement using an acceleration sensor or by calculating $a_x$ from engine and drive train parameters, and $a_y$ e.g. from the vehicle speed and the steering angle.

The program may be specific for the drive type of the vehicle, i.e. in a version for installation in a front wheel drive vehicle eqn. (9) is implemented for calculating $a_{CGY}^{\text{lim}}$ from $a_x$, whereas in a version for a rear wheel drive vehicle eqn. (12) is implemented, etc. Alternatively, a fit-them-all program may choose between eqns.(9, 12, 13, 14) based on stored drive train information, or it may calculate $a_{CGY}^{\text{lim}}$ using a simplified formula which can straightforwardly be deduced from any of eqns.(9, 12, 13, 14) by setting h=0.

An estimate A of the track-keeping capacity is then obtained from $a_{CGY}^{\text{lim}}$ and $a_y$ using eqn. (15). Based on this estimate, various measures can be taken. If A drops below a predetermined threshold, a warning can be issued to the driver, or automatic protection measures can be taken that act on the drive train or on the brakes of the vehicle.

## Claims

1. A method for judging the track-keeping capacity of a motor vehicle having front and rear axles, **characterized by** comprising the steps of

   a) estimating, for at least one of said axles, a first quantity proportional to the weight of the vehicle carried by said axle,
   b) estimating, for said axle, a second quantity proportional to a longitudinal drive force acting on said axle,
   c) calculating a difference of said first and second quantities,
   d) deriving a measure of the vehicle's track-keeping capacity from said difference.

2. The method of claim 1, wherein said first quantity is estimated proportional to a friction coefficient between wheels of the vehicle and a ground.

3. The method of claim 1 or 2, wherein the difference of step c) is calculated assuming said first and second quantities to be mutually perpendicular vectors.

4. The method of any of the preceding claims, wherein in step a) the weight carried by said axle is estimated considering a longitudinal acceleration of the vehicle.

5. The method of any of claims 1 to 3, wherein in step a) the weight carried by said axle is estimated independent of a longitudinal acceleration of the vehicle.

6. The method of any of the preceding claims, wherein the vehicle is front wheel driven and steps a) to d) are carried out for the front axle of the vehicle.

7. The method of any of claims 1 to 4, wherein vehicle is rear wheel driven, steps a) to d) are carried out for the rear axle of the vehicle.

8. The method of claim 6, wherein step a) is also carried out for the front axle of the vehicle, and in step d) the measure of the vehicle's track-keeping capacity is derived from said difference of step c) and the first quantity derived for the front axle.

9. The method of claim 7, wherein in step d) the measure of the vehicle's track-keeping capacity is derived from the smaller one among said difference of step c) and the first quantity derived for the front axle.

10. The method of any of claims 1, 2, 3, 5, wherein the vehicle is all-wheel driven.

11. A computer program product comprising program code means for enabling a computer, when carried out on it, to execute the method of any of the preceding claims.

12. A data carrier having recorded on it, in computer executable form, the computer program product of claim 11.

**Patentansprüche**

1. Verfahren zur Beurteilung der Spurhaltefähigkeit eines Kraftfahrzeugs mit Vorder- und Hinterachse, **dadurch gekennzeichnet, dass** es folgende Schritte umfasst:

   a) Für wenigstens eine der Achsen die Bestimmung einer ersten Menge proportional zu dem von der Achse getragenen Fahrzeuggewichts,
   b) Für diese Achse die Bestimmung einer zweiten Menge proportional zu einer auf die Achse in Längsrichtung wirkenden Antriebskraft,
   c) Berechnen einer Differenz zwischen der ersten und der zweiten Menge,
   d) Ableiten eines Maßes für die Spurhaltefähigkeit des Fahrzeugs von der Differenz.

2. Verfahren gemäß Anspruch 1, wobei die erste Menge proportional zu einem Reibungskoeffizienten zwischen den Rädern des Fahrzeugs und einem Boden bestimmt wird.

3. Verfahren gemäß Anspruch 1 oder 2, wobei die Differenz von Schritt c) unter der Annahme berechnet wird, dass die erste und die zweite Menge zueinander senkrechte Vektoren sind.

4. Verfahren gemäß einem der vorangehenden Ansprüche, wobei in Schritt a) das von der Achse getragene Gewicht unter Berücksichtigung einer in Längsrichtung wirkenden Beschleunigung des Fahrzeugs bestimmt wird.

5. Verfahren gemäß einem der Ansprüche 1 bis 3, wobei in Schritt a) das von der Achse getragene Gewicht unabhängig von einer in Längsrichtung wirkenden Beschleunigung des Fahrzeugs bestimmt wird.

6. Verfahren gemäß einem der vorangehenden Ansprüche, wobei das Fahrzeug mit Vorderradantrieb betrieben wird und die Schritte a) bis d) für die Vorderachse des Fahrzeugs ausgeführt werden.

7. Verfahren gemäß einem der Ansprüche 1 bis 4, wobei das Fahrzeug mit Hinterradantrieb betrieben wird und die Schritte a) bis d) für die Hinterachse des Fahrzeugs ausgeführt werden.

8. Verfahren gemäß Anspruch 6, wobei der Schritt a) auch für die Vorderachse des Fahrzeugs ausgeführt wird und in Schritt d) das Maß für die Spurhaltefähigkeit des Fahrzeugs von der Differenz von Schritt c) und der ersten für die Vorderachse abgeleiteten Menge abgeleitet wird.

9. Verfahren gemäß Anspruch 7, wobei in Schritt d) das Maß für die Spurhaltfähigkeit des Fahrzeugs vom kleineren Wert aus der Differenz von Schritt c) und der ersten für die Vorderachse abgeleiteten Menge abgeleitet wird.

10. Verfahren gemäß einem der Ansprüche 1, 2, 3, 5, wobei das Fahrzeug ein allradbetriebenes Fahrzeug ist.

11. Computerprogrammprodukt, das Programmcodemittel umfasst, die einem Computer, wenn sie auf diesem ausgeführt werden, die Ausführung des Verfahrens jedes der vorangehenden Ansprüche ermöglicht.

**12.** Datenträger, auf dem in Computer-ausführbarer Form das Computerprogrammprodukt des Anspruchs 11 aufgezeichnet ist.

**Revendications**

**1.** Procédé pour évaluer la capacité de tenue de route d'un véhicule à moteur possédant un essieu avant et un essieu arrière, **caractérisé en ce qu'**il comprend les étapes suivantes :

a) estimation, pour au moins un desdits essieux, d'une première grandeur proportionnelle au poids du véhicule porté par ledit essieu,
b) estimation, pour ledit essieu, d'une deuxième grandeur proportionnelle à un effort de traction longitudinal agissant sur ledit essieu,
c) calcul de la différence entre lesdites première et deuxièmes grandeurs,
d) dérivation d'une mesure de la capacité de tenue de route du véhicule à partir de ladite différence.

**2.** Procédé selon la revendication 1, dans lequel ladite première grandeur est estimée de façon proportionnelle à un coefficient de frottement entre les roues du véhicule et le sol.

**3.** Procédé selon la revendication 1 ou 2, dans lequel la différence de l'étape c) est calculée en supposant que lesdites première et deuxième grandeurs sont des vecteurs perpendiculaires entre eux.

**4.** Procédé selon l'une quelconque des revendications précédentes, dans lequel, dans l'étape a), le poids porté par ledit essieu est estimé en tenant compte d'une accélération longitudinale du véhicule.

**5.** Procédé selon l'une quelconque des revendications 1 à 3, dans lequel, dans l'étape a), le poids porté par ledit essieu est estimé indépendamment d'une accélération longitudinale du véhicule.

**6.** Procédé selon l'une quelconque des revendications précédentes, dans lequel le véhicule est propulsé par les roues avant et les étapes a) à d) sont exécutées pour l'essieu avant du véhicule.

**7.** Procédé selon l'une quelconque des revendications 1 à 4, dans lequel le véhicule est propulsé par les roues arrières et les étapes a) à d) sont exécutées pour l'essieu arrière du véhicule.

**8.** Procédé selon la revendication 6, dans lequel l'étape a) est également exécutée pour l'essieu avant du véhicule, et dans l'étape d), la mesure de la capacité de tenue de route du véhicule est dérivée de ladite différence de l'étape c) et de la première grandeur dérivée pour l'essieu avant.

**9.** Procédé selon la revendication 7, dans lequel, dans l'étape d), la mesure de la capacité de tenue de route du véhicule est dérivée de la plus petite valeur parmi ladite différence de l'étape c) et la première grandeur dérivée pour l'essieu avant.

**10.** Procédé selon l'une quelconque des revendications 1, 2, 3, 5, dans lequel le véhicule est propulsé par les quatre roues.

**11.** Programme d'ordinateur contenant des moyens de code de programmation permettant à un ordinateur sur lequel il est lu d'exécuter le procédé selon l'une quelconque des revendications précédentes.

**12.** Support de données sur lequel est enregistré, sous une forme exécutable par un ordinateur, le programme d'ordinateur selon la revendication 11.

# Fig. 1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0945320 B1

- US 5435193 A